Europäisches Patentamt

European Patent Office

Office européen des brevets

(19)

(11) **EP 0 685 725 B1**

(12) ## FASCICULE DE BREVET EUROPEEN

(45) Date de publication et mention
de la délivrance du brevet:
**01.08.2001 Bulletin 2001/31**

(51) Int Cl.[7]: **G01N 15/06**, G01N 27/64

(21) Numéro de dépôt: **95401190.4**

(22) Date de dépôt: **22.05.1995**

(54) **Sélecteur de particules chargées, à haute sensibilité**

Hochempfindliche Auswahleinrichtung für geladene Teilchen

High sensitivity selector of charged particles

(84) Etats contractants désignés:
**AT DE DK FR GB IT**

(30) Priorité: **24.05.1994 FR 9406273**

(43) Date de publication de la demande:
**06.12.1995 Bulletin 1995/49**

(73) Titulaire: **COMMISSARIAT A L'ENERGIE ATOMIQUE**
**75015 Paris (FR)**

(72) Inventeur: **Pourprix, Michel**
**F-91310 Monthlery (FR)**

(74) Mandataire: **Dubois-Chabert, Guy**
**BREVATOME**
**3, rue du Docteur Lanceraux**
**75008 Paris (FR)**

(56) Documents cités:
**EP-A- 0 404 681**

- **DATABASE WPI Week 8440, 14 Novembre 1984 Derwent Publications Ltd., London, GB; AN 84-248832 & SU-A-1 071 947 (LEN.AVIATION INST.) 7 Février 1984**
- **JOURNAL OF AEROSOL SCIENCE, vol.6, 1 Décembre 1975 pages 443 - 451 KNUTSON ET AL. 'AEROSOL CLASSIFICATION BY ELECTRIC MOBILITY,ETC.'**

## Description

Domaine technique

La présente invention a pour objet un sélecteur de mobilité électrique de particules chargées, utilisé en particulier afin de sélectionner des particules de granulométrie donnée (aérosol monodispersé) à partir de particules de granulométrie quelconque (aérosol polydispersé), qui sont en suspension dans l'air ou dans un autre gaz.

Entre autres applications, ce type d'appareil est par exemple particulièrement bien adapté dans le domaine de la recherche sur les aérosols, pour tester l'efficacité de filtres, pour produire des particules calibrées ou pour étudier la charge électrique des aérosols. Il convient tout spécialement pour les aérosols submicroniques jusqu'à des tailles aussi faibles que la taille des aérosols les plus fins, c'est à dire de l'ordre du nanomètre ($10^{-9}$m).

Art antérieur

L'un des moyens les plus fréquemment utilisés pour sélectionner des particules monodispersées repose sur le fait que les aérosols sont pratiquement tous porteurs de charges électriques, égales à la charge électrique unitaire ou multiples de celle-ci.

Par conséquent, on a déjà utilisé pour la sélection de particules chargées en suspension dans un gaz, des champs électrostatiques agissant sur les charges électriques qu'elles portent. A cet effet, on définit couramment une notion fondamentale dans ce domaine qui est celle de la mobilité électrique d'une particule chargée placée dans un champ électrostatique. Cette grandeur, qui définit la plus ou moins grande aptitude d'une telle particule à subir une déviation sous l'effet de ce champ, peut se traduire par l'égalité suivante :

$$\vec{W}=Z\vec{E},$$

égalité vectorielle dans laquelle $\vec{W}$ est la vitesse de dérive acquise par la particule sous l'influence du champ électrique $\vec{E}$ à laquelle elle est soumise. Le coefficient $Z$ de proportionnalité entre les deux grandeurs précédentes est précisément la mobilité électrique en question. Comme cette mobilité électrique est :

- d'une part proportionnelle à la charge électrique de la particule,
- et, d'autre part, inversement proportionnelle à son diamètre,

on conçoit la possibilité de réaliser de véritables sélecteurs de particules en fonction de leur taille, si la loi de charge est connue, consistant à soumettre des particules entraînées dans un courant gazeux à l'action d'un champ électrique existant entre deux électrodes. Sous l'effet du champ, les particules chargées se déposent, suivant leur signe, sur l'une de ces électrodes et l'abscisse de leur dépôt par rapport à la direction du courant gazeux est caractéristique de leur mobilité en ce sens que plus cette mobilité électrique est élevée, plus l'abscisse de leur dépôt est proche de l'origine du courant gazeux qui les véhicule. On obtient ainsi un étalement ou une séparation dans l'espace des particules collectées. On peut sélectionner, après cette séparation, les particules ayant une certaine mobilité, donc une certaine granulométrie si la loi de charge est connue.

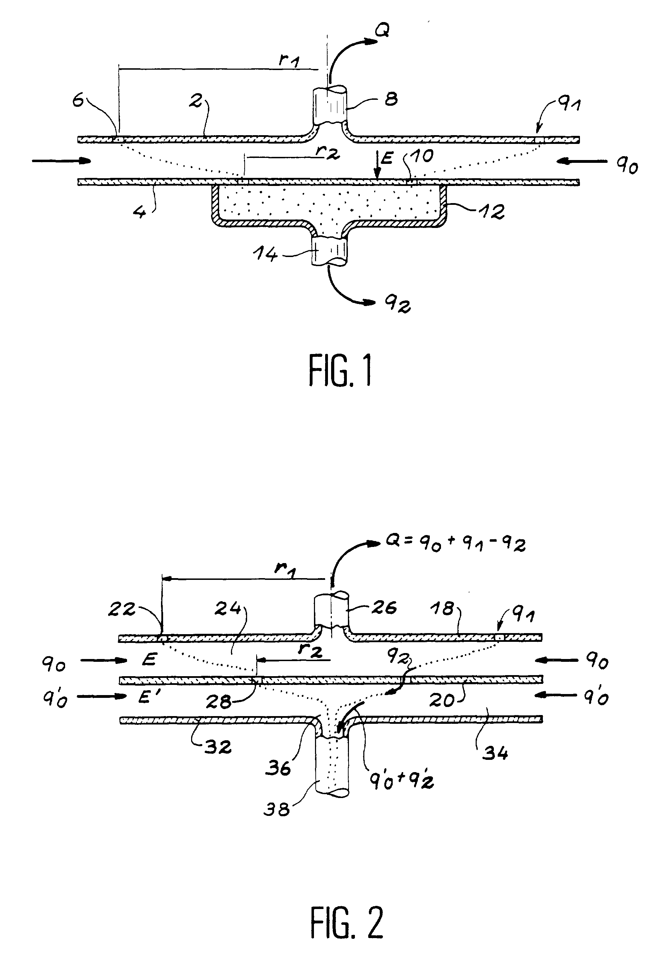

Un appareil reposant sur ce principe est décrit dans le certificat d'addition français n°90 02413 du 27/02/90, publiée sous le n°2 658 916 (US-5 117 190), intitulé "capteur électrostatique de particules d'aérosol et appareils en comportant application". Ce type d'appareil est illustré sur la figure 1 et comporte deux disques conducteurs coaxiaux 2, 4 espacés et parallèles entre lesquels on établit une différence de potentiel V et, donc, un champ électrique $\vec{E}$. Le disque 2 comporte une fente annulaire 6 (rayon $r_1$) par laquelle sont introduites les particules d'un aérosol avec un débit $q_1$. Une aspiration centrale 8 est prévue, par laquelle un débit d'air Q circule sous l'effet d'une pompe non représentée sur la figure.

Les particules sont entraînées vers une seconde fente annulaire 10 de rayon $r_2$ pratiquée dans le disque 4 sous l'action conjuguée :

- d'un écoulement d'air filtré au débit $q_0$, radial et laminaire, établi entre les deux disques,
- du champ électrique E imposé entre les deux disques.

A travers la fente 10, l'air s'écoule avec un débit $q_2$ dans un boîtier cylindrique 12 accolé sous le disque 4. On a donc : $Q=q_0+q_1-q_2$. Les particules qui traversent la fente 10 ont la même mobilité électrique $Z=Q/\pi E(r_1{}^2-r_2{}^2)$.

Pour régler cette mobilité électrique à la valeur souhaitable cas par cas, on peut agir sur les deux paramètres que sont le débit Q d'une part et la différence de potentiel V appliquée entre les deux disques conducteurs coaxiaux 2 et 4.

Par le boîtier cylindrique 12 et un conduit 14, les particules peuvent ensuite être dirigées vers tout type de dispositif convenant à l'application envisagée, par exemple un compteur de particules à étalonner avec les particules calibrées ainsi produites.

Ce type d'appareil, comme tous les sélecteurs de particules chargées existants aujourd'hui, présente toutefois certains inconvénients s'il est utilisé pour sélectionner des particules de taille nanométrique.

En premier lieu, le transport de telles particules dans les circuits du système entraîne des pertes par diffusion brownienne au voisinage des parois notamment dans le boîtier cylindrique 12 et dans le conduit de sortie 14. A titre indicatif, un conduit de 30cm de longueur, au débit de 0,3 $\ell$/min collecte par diffusion brownienne environ 50% des particules de 3 nanomètres.

De plus, la trajectoire n'est pas le même pour toutes les particules et il se produit, de ce fait, un étalement du temps de transit et une certaine dispersion à travers l'appareil, ce qui peut être préjudiciable dans certaines applications.

Exposé de l'invention

L'invention a pour but de résoudre ces problèmes.

Elle a pour objet un sélecteur de particules d'aérosol contenues dans une atmosphère, comprenant un premier et un second disques conducteurs coaxiaux, espacés et parallèles, entre lesquels on établit un champ électrique en les portant à des potentiels différents, l'espace compris entre les deux disques communiquant avec l'atmosphère à examiner à travers une fente annulaire de rayon $r_1$ pratiquée dans le premier disque, une aspiration centrale étant prévue dans le premier disque pour faire circuler dans cet espace, à partir de la périphérie des disques, un écoulement d'air filtré laminaire, centripète et stable, le second disque étant muni d'une ouverture en forme d'anneau de rayon $r_2$ plus petit que le rayon $r_1$ de la fente annulaire, le rayon $r_1$ et le rayon $r_2$ étant centrés sur l'axe des deux disques, caractérisé en ce que :

- un troisième disque est situé en regard du second disque,
- des moyens sont prévus pour injecter, dans l'espace compris entre le second et le troisième disques, un écoulement d'air filtré, radial et laminaire à partir de la périphérie de ces deux derniers disques,
- un conduit central est fixé au troisième disque, par lequel les particules sélectionnées sont amenées vers l'extérieur de l'appareil.

Dans cette configuration, on réalise donc un deuxième étage à l'aide des troisième et second disques et on réalise ce qu'on appelle un "confinement dynamique" à l'aide d'un écoulement d'air filtré entre ces deux disques. Cet écoulement canalise les particules dès leur extraction du premier étage. Sortant ensuite du second étage, les particules sont ensuite véhiculées dans un conduit assurant leur transfert vers l'extérieur, toujours en écoulement laminaire, avec la particularité qu'elles se trouvent confinées au voisinage du centre de l'écoulement, et ceci sans contact avec les parois (donc sans perte) et avec des trajectoires identiques (donc avec des temps de transit identiques).

Selon un mode particulier de réalisation des moyens sont prévus pour établir entre les second et troisième disques un champ électrique auxiliaire $\vec{E}'$ permettant de décoller les particules sélectionnées à travers la fente de rayon $r_2$ de la surface avec laquelle elles peuvent être en contact.

Selon un autre mode particulier de réalisation, l'anneau qui définit l'ouverture pratiquée dans le second disque est de diamètre intérieur nul, c'est-à-dire que l'ouverture est ramenée à un orifice circulaire.

D'autres modes particuliers de réalisation de l'invention apparaissent dans les revendications dépendantes.

Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :

- la figure 1 représente un sélecteur de particules d'aérosol selon l'art antérieur,
- la figure 2 représente le principe d'un sélecteur de particules selon l'invention,
- la figure 3 représente un sélecteur selon l'invention, vu en coupe,
- la figure 4 représente un mode particulier de réalisation d'un sélecteur selon l'invention, et
- la figure 5 représente des spectres obtenus avec un sélecteur selon l'invention.

Description détaillée de modes de réalisation

La figure 2 représente un schéma d'un sélecteur selon l'invention.

L'appareil comprend d'abord un premier étage constitué d'un sélecteur de mobilité électrique circulaire (en abrégé SMEC), comportant deux disques 18, 20 concentriques. Le premier disque 18 présente une fente annulaire 22 de rayon $r_1$ par laquelle un échantillon de gaz contenant les particules à analyser est introduit avec un débit $q_1$. Les deux disques étant conducteurs, on peut donc les porter chacun à un certain potentiel et établir dans l'espace 24 qui les sépare un champ électrique $\vec{E}$. Dans le second disque 20 est pratiquée une ouverture annulaire 28 de rayon moyen $r_2$ qui sera traversée par un débit d'air $q_2$. Entre les deux disques, à la périphérie de l'espace 24, est injecté, par des moyens non représentés sur la figure 2, un gaz d'entraînement (air filtré) $q_o$, tel qu'un écoulement laminaire circule entre les deux disques, jusqu'à la tubulure 26 d'aspiration centrale qui absorbe donc un débit $Q = q_o + q_1 - q_2$.

Si l'on appelle Z la mobilité électrique des particules, 2h la distance séparant les disques 18 et 20, V la différence de potentiel entre ces disques, la théorie de l'appareil montre que les particules d'aérosols qui traversent la fente de rayon $r_2$ ont une mobilité Z telle que :

$$r_2 = \sqrt{r_1^2 - \frac{2Qh}{\pi \overline{Z} V}}$$

Un second étage récolte les particules ayant cette même mobilité électrique Z. Cet étage est constitué d'une part du second disque 20 déjà décrit ci-dessus, d'autre part d'un troisième disque 32 situé en regard du second, et définissant avec ce dernier un espace 34. A partir de la périphérie de cet espace 34, on peut imposer, à l'aide de moyens connus par ailleurs de l'homme de l'art, un débit $q'_o$ d'air filtré et radial. $q'_o$ est choisi de telle sorte que l'écoulement d'air dans le second étage soit laminaire. Ainsi, les particules sélectionnées à travers l'ouverture 28 sont canalisées dès leur extraction du premier étage.

En outre, un champ électrique E', obtenu par exemple en prenant pour disque 32 un disque conducteur et en portant chacun des disques 20 et 32 à un certain potentiel (différence de potentiel notée V'), peut être appliqué entre ces deux disques de façon à décoller les particules des surfaces avec lesquelles elles pourraient être en contact. Le champ E' peut être en relation simple avec le champ E : E'=f(E) ; par exemple E'=E/10. On peut imposer, notamment, un asservissement de E' à E.

Le troisième disque 32 présente en son centre une ouverture 36 qui débouche sur un conduit 38. Le centre de l'ouverture 36 est de préférence aligné avec les centres des disques 18 et 20. Si les particules sélectionnées s'écoulent toujours en écoulement laminaire, avec un débit $q'_o+q_2$, et sont confinées au voisinage du centre de l'écoulement, dans l'axe de l'ouverture 36, sans contact avec les parois, donc sans perte. De plus, les trajectoires suivies par les particules sont identiques dans tout l'appareil, y compris dans le deuxième étage et dans le conduit 38, donc les particules s'écoulent avec des temps de transit identiques et faciles à déterminer puisque les dimensions géométriques du système sont facilement déterminables.

Les particules sont ensuite évacuées par le conduit 38 vers l'extérieur du sélecteur.

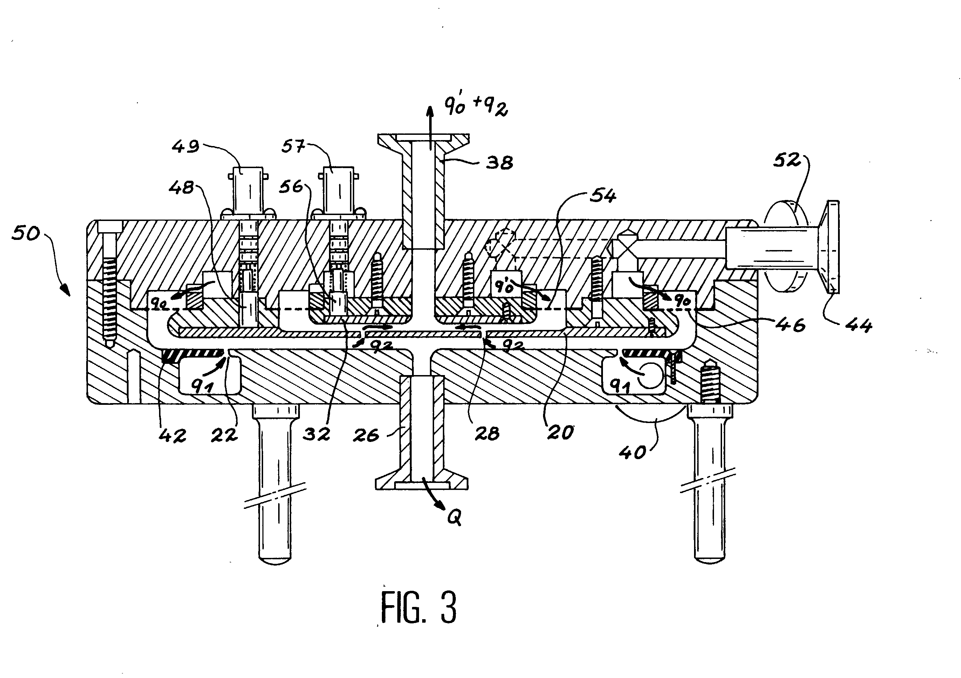

Un appareil fonctionnant sur le principe qui vient d'être décrit est représenté sur la figure 3, en coupe.

Les références numériques de la figure 2 y sont reprises en désignant les mêmes éléments.

Le gaz contenant les particules chargées à sélectionner rentre au débit $q_1$ par un embout 40 et sort par la fente profilée d'une lèvre 42.

De l'air filtré rentre au débit $q_o$ par un embout 44 et passe au travers d'un disque poreux 46 (en fibres de verre) pour alimenter le premier étage. Il est extrait au débit Q par l'embout 8.

Une haute tension V est appliquée par l'intermédiaire d'un contacteur 48 et d'une embase haute tension 49, le bloc 50 étant au potentiel zéro. Les particules chargées vont être déviées de leurs trajectoires radiales et se déposer sur l'électrode 20 en fonction de leur mobilité électrique.

Dans le second étage, de l'air filtré rentre au débit $q'_o$ par l'embout 52 et passe au travers du disque poreux 54. Le gaz est ensuite aspiré au travers de l'embout 38 au débit $q'_o+q_2$.

L'électrode 20 est percée de trous régulièrement espacés pour recréer une fente d'extraction annulaire 28. Les particules chargées qui ont la mobilité électrique requise sont donc extraites au débit $q_2$ et sont entraînées dans l'axe du conduit de sortie 38.

Une seconde haute tension V' est éventuellement appliquée au troisième disque 32 par l'intermédiaire d'un contacteur 56 et d'une embase haute tension 57 pour "décoller" les particules de la surface avec laquelle elles se trouvent en contact.

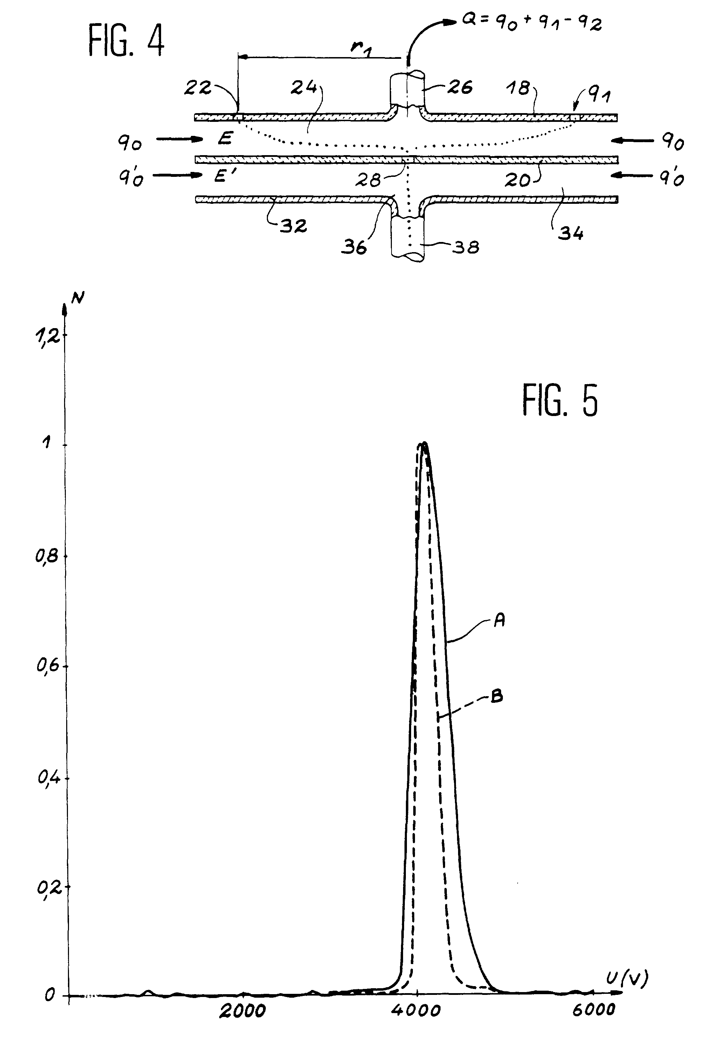

Plus simplement, la fente d'extraction annulaire 28 peut se réduire à un seul orifice circulaire central tel qu'illustré sur la figure 4, où les références numériques ont la même signification que sur la figure 2.

Bien que l'orifice central d'extraction 28 représente un point singulier à la fois du point de vue aéraulique et du point de vue électrique, les particules qui viennent se déposer sur le second disque, au centre, sont aspirées avec un débit $q_2$ à travers cet orifice 28. Ces particules ont pour mobilité $Z=Q/\pi E r_1^2$. Le diamètre Ø de cet orifice est de préférence choisi de façon à assurer une bonne sélectivité des particules (si le diamètre est important la sélectivité est faible) mais aussi de façon à ne pas perturber l'écoulement du fluide qui le traverse (si le diamètre est faible, un phénomène de "jet" se produit au niveau de cet orifice). A titre d'exemple, un appareil a été réalisé avec $r_1$=6,5cm et Ø =2,7mm. Cette configuration présente l'avantage de ne pas nécessiter de champ électrique auxiliaire E' et d'extraire les particules exactement dans l'axe de l'appareil. Là encore, les particules sont véhiculées en écoulement laminaire, sans contact avec les parois (donc sans perte), avec des temps de transit identiques et en suivant des trajectoires identiques quasiment rectilignes dans le deuxième étage.

Les particules sont ensuite comptées par un détecteur 40 choisi parmi des systèmes connus basés le plus souvent sur des méthodes optiques ou électriques.

Des exemples de résultats obtenus avec un sélecteur selon la présente invention sont représentés sur la figure 5.

L'appareil utilisé est du type représenté sur la figure 4, c'est-à-dire avec un trou central 28 dans le disque intermédiaire 20 et sans champ électrique E'. Le sélecteur est muni, en sortie, d'un détecteur optique (compteur de particules par condensation), dans lequel les particules sont entraînées au travers d'un faisceau lumineux et où chaque particule diffuse une certaine quantité de lumière, analysée ensuite par un photodétecteur.

En reprenant les notations de la figure 4, les caractéristiques pour ces exemples sont les suivantes :

- diamètre du trou central 28 d'extraction : 2,7mm,
- distance entre les disques 18 et 20 : 4mm (=distance entre les disques 20 et 32),
- $r_1$ = 6,5cm,
- $q_o$=20$\ell$/min ; $q_1$=$q_2$=1 $\ell$/min (courbe A) ou 0,5 $\ell$/min (courbe B) ; q'$_o$=(0,4) $\ell$/min (A) ou 0,9 $\ell$/min (B),
- diamètre des particules utilisées = 0,107 µm (particules portant une seule charge électrique),
- tension V entre les disques 18 et 20 : variable de 0 à 6000 Volts.

Les courbes A et B donnent, en fonction de la tension, le nombre N de particules sélectionnées comptées par unité de volume (échelle normalisée). Ces courbes montrent en outre la très bonne résolution de l'appareil.

L'appareil décrit a notamment pour application essentielle la production de particules monodispersées à partir de sources polydispersées. Pour produire des particules de taille déterminée, il suffit de les sélectionner en fonction de la mobilité Z correspondant à cette taille, et donc de choisir le champ E et le débit Q appropriés. L'appareil est donc un véritable "générateur étalon primaire" dans le domaine des particules submicroniques, avec l'avantage de pouvoir descendre à des tailles de particules de l'ordre du nanomètre, grâce au confinement dynamique qui évite les pertes par diffusion sur les parois, ce qu'aucun système connu ne sait faire aujourd'hui.

## Revendications

1. Sélecteur de mobilité électrique de particules d'aérosol contenues dans une atmosphère, comprenant un premier (18) et un second (20) disques conducteurs coaxiaux, espacés et parallèles, entre lesquels on établit un champ électrique E en les portant à des potentiels différents, l'espace (24) compris entre les deux disques communiquant avec l'atmosphère à examiner à travers une fente annulaire (22) de rayon $r_1$ pratiquée dans le premier disque, une aspiration centrale (26) étant prévue dans le premier disque pour faire circuler dans cet espace, à partir de la périphérie des disques, un écoulement d'air filtré laminaire, centripète et stable, le second disque étant muni d'une ouverture annulaire (28) de rayon moyen $r_2$ plus petit que le rayon $r_1$ de la fente annulaire, le rayon $r_1$ et le rayon $r_2$ étant centrés sur l'axe des deux disques, caractérisé en ce qu'il comporte en outre :

   - un troisième disque (32) situé en regard du second disque,
   - des moyens pour injecter, dans l'espace compris entre le second et le troisième disques, un écoulement d'air filtré, radial et laminaire à partir de la périphérie de ces deux derniers disques,

   - un conduit central (38) fixé au troisième disque, par lequel les particules sont évacuées vers l'extérieur du sélecteur.

2. Sélecteur selon la revendication 1, caractérisé en ce que des moyens sont prévus pour établir entre les second (20) et troisième disques (32) un champ électrique auxiliaire $\vec{E}'$ asservi à $\vec{E}$, permettant de décoller les particules sélectionnées à travers l'ouverture annulaire (28) de la surface avec laquelle elles peuvent être en contact.

3. Sélecteur selon la revendication 1, caractérisé en ce que l'ouverture annulaire (28) se réduit à un seul orifice d'extraction central.

## Patentansprüche

1. Auswahlvorrichtung der elektrischen Mobilität in einer Atmosphäre enthaltener Aerosolteilchen, eine erste (18) und eine zweite (20) koaxiale Scheibe umfassend, beabstandet und parallel, zwischen denen man ein elektrisches Feld E erzeugt, indem man unterschiedliche Potentiale an sie legt, wobei der zwischen den beiden Scheiben enthaltene Raum (24) mit der zu prüfenden Atmosphäre durch einen in der ersten Scheibe vorhandenen ringförmigen Schlitz (22) des Radius $r_1$ kommuniziert und eine zentrale Absaugung (26) in der ersten Scheibe vorgesehen ist, um in diesem Raum einen laminaren gefilterten Luftstrom, ausgehend vom Rand der Scheiben, fließen zu lassen, zentripetal und stabil, wobei die zweite Scheibe mit einer ringförmigen Öffnung (28) des mittleren Radius $r_2$, kleiner als der Radius $r_1$ des ringförmigen Schlitzes, versehen ist und die Radien $r_1$ und $r_2$ auf die Achse der beiden Scheiben zentriert sind,

   **dadurch gekennzeichnet**, dass sie außerdem umfasst:

   - eine dritte Scheibe (32), der zweiten Scheibe gegenüberstehend,
   - Einrichtungen, um in den zwischen der zweiten und der dritten Scheibe enthaltenen Raum einen gefilterten Luftstrom einzuspeisen, radial und laminar, ausgehend vom Rand dieser beiden letzteren Scheiben,
   - eine zentrale Leitung (38), befestigt an der dritten Scheibe, durch die die Teilchen aus der Auswahleinrichtung evakuiert werden.

2. Auswahlvorrichtung nach Anspruch 1, dadurch gekennzeichnet, dass Einrichtungen vorgesehen sind, um zwischen der zweiten (20) und der dritten (32) Scheibe ein von $\vec{E}$ abhängiges elektrisches Hilfsfeld $\vec{E}'$ zu erzeugen, das ermöglicht, die durch die ringförmige Öffnung (28) ausgewählten Teilchen von der Oberfläche abzulösen, mit der sie in Kontakt sein können.

3. Auswahleinrichtung nach Anspruch 1, dadurch gekennzeichnet, dass die ringförmige Öffnung (28) sich auf eine einzige zentrale Extraktionsöffnung reduziert.

**Claims**

1. Electrical mobility selector of aerosol particles contained in an atmosphere, comprising a first (18) and a second (20) spaced, parallel, coaxial conductive disks, between which is established an electrical field E by raising them to different potentials, the space (24) between the two disks communicating with the atmosphere to be examined through an annular slot (22) of radius r1 made in the first disk, a central intake (26) being provided in the first disk for bringing about a circulation in said space, as from the periphery of the disks, of a stable, centripetal, laminar filtered air flow, the second disk being provided with an annular opening (28) of mean radius r2 smaller than the radius r1 of the annular slot, radius r1 and radius r2 being centred on the axis of both disks, characterized in that it also comprises:

   - a third disk (32) facing the second disk,
   - means for injecting, into the space between the second and third disks, a radial, laminar, filtered air flow from the periphery of said two latter disks,
   - a central pipe (38) fixed to the third disk by which the particles are discharged to the outside of the selector.

2. Selector according to claim 1, characterized in that means are provided for establishing between the second (20) and third (32) disks an auxiliary electrical field $\vec{E}$, dependent on $\vec{E}$, making it possible to detach the selected particles through the annular opening (28) from the surface with which they can be in contact.

3. Selector according to claim 1, characterized in that the annular opening (28) is reduced to a single, central extraction orifice.

FIG. 1

FIG. 2

FIG. 3

# FIG. 4

$$Q = q_0 + q_1 - q_2$$

$r_1$

22   24   26   18   $q_1$

$q_0 \rightarrow$   E   $\leftarrow q_0$

$q'_0 \rightarrow$   E'   $\leftarrow q'_0$

28   20

32   34

36   38

# FIG. 5

A

B

$U(V)$

2000   4000   6000